# EUROPÄISCHE PATENTSCHRIFT

(11) **EP 1 414 124 B1**
(45) Veröffentlichungstag und Bekanntmachung des Hinweises auf die Patenterteilung: **19.10.2005**
(21) Anmeldenummer: 03024182.2
(22) Anmeldetag: 21.10.2003
(51) Int. Cl.: H02G 3/04, A01G 1/08

(54) **Versorgungskanal zur Aufnahme von Wasser- und/oder Elektroleitungen für Aussenanlagen**
Ourdoor supply channel for accomodating water pipes and/or electrical cables
Canal d'alimentation extérieur pour contenir des canalisations d'eau et/ou d'électricité

(30) Priorität: 23.10.2002 DE 20216270 U
(43) Veröffentlichungstag der Anmeldung: 28.04.2004
(73) Patentinhaber: Eychmüller, Thomas, 22559 Hamburg (DE)
(72) Erfinder: Eychmüller, Thomas, 22559 Hamburg (DE)
(74) Vertreter: Jaap, Reinhard

(56) Entgegenhaltungen:
- US-A- 4 945 675
- US-A- 5 768 824

## Beschreibung

Die Erfindung bezieht sich auf einen Versorgungskanal zur Aufnahme von Wasser- und/oder Elektroleitungen für Außenanlagen nach dem Oberbegriff des Anspruchs 1.
Derartige Versorgungskanäle (US-A-5 768 824) werden einerseits von gärtnerischen Betrieben in Parkanlagen und andererseits von Privatanwendern in deren Gärten oder auf deren Grundstücken zur Versorgung mit Wasser und mit elektrischem Strom verwendet.

Grundstücks- und Gartenbesitzer benötigen an unterschiedlichen Orten ihrer Außenanlage neben Wasser- mittlerweile immer mehr Stromentnahmestellen. Wasser wird dabei hauptsächlich zur Beregnung von Pflanzen, aber auch zum Befüllen oder zur Reinigung von Gartenteichen verwendet. Elektrischer Strom wird für verschiedene Arbeitsgeräte, aber auch für Teichpumpen, Heizstrahler und Beleuchtung benötigt.

Die Versorgung mit Wasser und elektrischem Strom ist mittels flexibler oberirdisch ausgelegter oder fest installierter in das Erdreich eingelassener Versorgungsleitungen möglich.
Als nachteilig erweist sich, dass oberirdisch ausgelegte Wasserschläuche und Elektroleitungen unansehnlich sind und ein Unfallrisiko darstellen. Zudem ist der Umgang mit den Wasserschläuchen und Elektroleitungen aufwendig, da diese aus-, eingerollt und entsprechend verstaut werden müssen. In das Erdreich eingelassene Wasserrohr- und Elektroleitungen sind aufwendig zu verlegen und deshalb teuer. Derartige Leitungen lassen sich nicht oder nur mit sehr hohem Aufwand in bestehende Grundstücks- oder Gartenensemble nachrüsten, da die Außenanlage dazu unverhältnismäßig umfänglich aufgegraben werden müsste.

Bekannt sind Versorgungskanäle, die aus U-förmigen Steinen bestehen, die mittels flacher Abdecksteine abdeckbar sind. Die U-förmigen Steine sind einstückig ausgeführt und bestehen aus einem flachen Boden und zwei senkrecht dazu angeordneten Seitenwänden. Der Boden ist rechteckig ausgeführt und seine Größe kann unterschiedlich dimensioniert sein. Zur Abdeckung der U-förmigen Steine sind flache Abdecksteine, die der Größe des Bodens entsprechen, auf den Seitenflächen ablegbar. Die U-förmigen Steine werden jeweils stirnseitig aneinandergereiht angeordnet, wodurch entlang der Steine der Versorgungskanal zur Aufnahme von Wasserschläuchen und Elektroleitungen entsteht. Dabei werden die U-förmigen Steine maximal bis zur Höhe ihrer Seitenflächen in das Erdreich eingelassen.
Nachteilig bei der Verwendung eines Versorgungskanals aus den U-förmigen Steinen in Verbindung mit den flachen Abdecksteinen ist, dass dieser großbauend, schwer und teuer ist. Bedingt durch die Größe und das Gewicht der Steine ist das Verlegen sehr aufwendig. Zudem müssen die Steine entsprechend tief in das Erdreich eingelassen werden. Als besonders nachteilig erweist sich die U-Form der Steine. Die Steine müssen zur Herstellung des Versorgungskanals, ohne eine Verbindung untereinander, nur aneinandergereiht werden. Dies macht einen genauen Aushub erforderlich, denn andernfalls ist der Schacht undicht gegenüber aufgefülltem Erdreich oder die Abdecksteine liegen entsprechend kippelig auf den Steinen. Bei bis zur Höhe der Seitenflächen in das Erdreich eingelassenen Steinen bauen die Abdecksteine zudem auf und bilden dabei einen höherliegenden Bereich aus, der als eine unschöne Abgrenzung auftritt. Die erhöhte Abgrenzung durch die Abdecksteine stellt zudem eine Unfallquelle dar und ist besonders bei der Bearbeitung mit Geräten, beispielsweise einem Rasenmäher, störend. Nach Regenfällen oder bedingt durch andere Erosionserscheinungen ist der Versorgungskanal aus den U-förmigen Steinen besonders durch sein hohes Gewicht und seine flache Auflage im Erdreich gegen Einsinken und Wegrutschen gefährdet.

Aus der DE 202 02 732 U1 ist ein Kantenstein bekannt, der zur Einfassung von Rasen oder Beeten vorgesehen ist. Dieser Kantenstein ist aber auch zur Aufnahme von Elektrokabeln oder Wasserschläuchen ausgelegt. Dazu ist der Kantenstein unter Verwendung eines Kunststoffmaterials hohlförmig ausgebildet und mit einem abnehmbaren Deckel ausgestattet. In der Länge ist der Kantenstein durchgehend ausgebildet, sodass eine Versorgungsleitung hindurchgeführt werden kann. Der Kantenstein besitzt einerseits eine konkav abgerundete Stirnfläche und andererseits eine konvex ausgebildete Stirnfläche. Damit ist die eine Stirnfläche eines Kantensteins mit der anderen Stirnfläche eines anderen Kantensteins zueinander passfähig und so können zwei eingepasste Kantensteine in einem begrenzten Winkel zueinander ausgerichtet werden. Der Kantenstein besitzt an seinen Stirnseiten weiterhin entsprechende hakenförmige Elemente, um zwei Kantensteine zugfest miteinander zu koppeln. Außerdem ist der Kantenstein zur besseren Verankerung des Kantensteins im Erdreich mit mehreren schmalen, nach unten gerichteten Zungen ausgestattet.
Ein aus solchen Kantensteinen hergestellter Versorgungskanal ist in sich nicht ausreichend stabil, sodass einzelne Kantensteine einer äußeren Belastung nachgeben und sich verkanten oder weiter in den Erdboden eindrücken. Dadurch wird die strenge Linie einer Rasenkante unterbrochen und gestört. Das schadet der Ansicht. Darüber hinaus besteht die Gefahr, dass der Kantenstein schon unter einer geringen äußeren Belastung zerbricht. Von Nachteil ist auch, dass sich die Kantensteine nur in einer Ebene zusammenfügen lassen. Eine Richtungsänderung innerhalb dieser Ebene ist nur begrenzt im Rahmen des Schwenkweges der eingepassten Enden der Kantensteine möglich. Nachteilig ist auch, dass sich ein aus mehreren Kantensteinen zusammengefügter Versorgungskanal nicht an die Erdbodenerhebungen oder Erdbodenabsenkungen anpassen lässt. Außerdem ist der Aufwand zur Verlegung eines Versorgungskanals sehr aufwendig und damit teuer, weil eine Vielzahl von Kantensteinen erforderlich ist und weil jeder Kantenstein für sich in der Höhe und in der Flucht ausgerichtet werden muss.

Der Erfindung liegt daher die Aufgabe zu Grunde, einen gattungsgemäßen Versorgungskanal zur Aufnahme von Wasser- und/oder Elektroleitungen für Außenanlagen zu entwickeln, der gegen äußere Belastungen stabil ist und der in allen Ebenen und der in allen Richtungen an die örtlichen Gegebenheiten anpassungsfähig ist.

Diese Aufgabe wird durch die kennzeichnenden Merkmale des Anspruchs 1 gelöst. Zweckdienliche Ausgestaltungen ergeben sich aus den Unteransprüchen 2 bis 7.

Der erfindungsgemäße Versorgungskanal zur Aufnahme von Wasser- und/oder Elektroleitungen für Außenanlagen beseitigt die genannten Nachteile des Standes der Technik. So zeichnet sich der neue Versorgungskanal vor allem durch eine hohe Stabilität gegenüber einer auf Biegung, Knickung oder Verdrehung gerichteten äußeren Belastung aus. Das ist in erster Linie auf das starre Kunststoffmaterial in Verbindung mit der frei wählbaren Länge zurückzuführen. Sehr stabilitätsverbessernd ist auch die gewählte Trapezform des Aufnahmekörpers, weil diese eine innere Stabilität gegen Verdrehung erzeugt. Außerdem passen sich die trapezförmig ausgerichteten Seitenwände des Aufnahmekörpers genau an die in der Regel ebenfalls schräg verlaufenden Seitenwände des ausgehobenen Erdgrabens an, wodurch die Seitenwände durch den gefestigten Erdboden eine bessere Abstützung als durch ein aufgefülltes Erdreich erfahren. Eine sehr hohe Stabilität erzeugen auch die Bodenanker durch ihr kreuzförmiges Profil und durch ihre mittige Anordnung unterhalb des Aufnahmekörpers. Durch diese mittige Anordnung wird die Stabilität in vorteilhafter Weise auf den Aufnahmekörper übertragen. Sehr vorteilhaft ist auch, dass die Bodenanker nicht einstückig mit dem Aufnahmekörper ausgeführt, sondern auf den Aufnahmekörper aufsteckbar ausgeführt sind. Dadurch können Bodenanker mit unterschiedlichen Längen eingesetzt und die Bodenanker in wählbaren Abständen mit einer günstigen Lastverteilung angeordnet werden. Das ermöglicht eine gute Anpassung des Versorgungskanals an die Tragfähigkeit des Erdbodens.
So wie jedes Bauteil des Versorgungskanals im Einzelnen auf eine Verbesserung der Stabilität einwirkt, so verbessert sich die Stabilität auch durch die Kompaktheit des zu einer Baueinheit zusammengesteckten Versorgungskanals.
Von großem Vorteil ist auch der flexible Aufnahmekörper, der am Ende eines oder zwischen zwei starren Aufnahmekörpern angeordnet werden kann, weil damit in einfacher Weise alle im Gelände befindlichen Hindernisse in jeder beliebigen Ebene und Richtung umgangen werden können. Das erhöht den Einsatzbereich des Versorgungskanals. Es ist auch zweckmäßig, den Innenraum des starren Aufnahmekörpers mit einer Trennwand auszurüsten und diese Trennwand gegen das Deckel-Element anstoßen zu lassen. Damit wird der Deckel zusätzlich abgestützt, was wiederum die Stabilität des gesamten Versorgungskanals erhöht, aber gleichzeitig auch die Tragfähigkeit des Deckel-Elementes verbessert.
Es ist zweckmäßig, wenn alle Bauteile des Versorgungskanals zusammensteckbar ausgeführt sind. Das vereinfacht die Herstellung des Versorgungskanals und seine Anpassung an die örtlichen Gegebenheiten.
Es ist auch zweckmäßig, dass der flexible Aufnahmekörper aus zwei zum starren Aufnahmekörper passenden Kupplungsteilen und einem flexiblen Mittelteil besteht, wobei das Mittelteil aus mehreren radialen Gliedern und einer, die Glieder zusammenhaltenden Kunststoffhaut besteht. Dabei erzeugen die radialen Glieder eine obere Ansicht, die der Ansicht des starren Aufnahmekörpers angepasst ist und sie geben dem flexiblen Aufnahmekörper auch eine ausreichende Stabilität gegen äußere Belastungen. Die Kunststoffhaut ermöglicht eine maximale Flexibilität.
Bei alledem ist der neue Versorgungskanal kostengünstig herzustellen, einfach zu handhaben und in einer breiten Anwendung einzusetzen.
Neben der vorrangigen Aufgabe zur verdeckten Verlegung von Wasser- und/oder Elektroleitungen aber auch von Luftleitungen zum Beispiel zur Belüftung eines Gartenteiches eignet sich der neue Versorgungskanal auch ausgezeichnet zur Einfassung von Rasen- oder Beetflächen. Beide Funktionen können in vorteilhafter Weise kombiniert werden.

Die Erfindung soll anhand eines Ausführungsbeispiels näher erläutert werden.
Dazu zeigen:
- **Fig. 1**: eine schematische Explosionsdarstellung eines Versorgungskanals in einer Seitenansicht mit einem Lampen-, einem Funktionsdeckel- und einem Steckdosen-Element als alternative Funktions-Elemente,
- **Fig. 2**: eine schematische Explosionsdarstellung eines Abschnittes des Versorgungskanals in einer perspektivischen Ansicht,
- **Fig. 3**: eine schematische Darstellung eines Verbindungs-Elements zur Verbindung mehrerer Elemente des Versorgungskanals in einer Seitenansicht,
- **Fig. 4**: eine schematische Darstellung des Verbindungs-Elements aus Fig. 3 in einer perspektivischen Ansicht,
- **Fig. 5**: eine schematische Darstellung eines geschlossenen Versorgungskanals in einer Seitenansicht,
- **Fig. 6**: eine schematische Darstellung eines Abschlussdeckels in einer Seitenansicht,
- **Fig. 7**: eine schematische Darstellung des Abschlussdeckels aus Fig. 6 in einer perspektivischen Ansicht,
- **Fig. 8:**: eine schematische Darstellung eines flexiblen Aufnahmekörpers und
- **Fig. 9:**: eine perspektivische Darstellung des flexiblen Aufnahmekörpers.

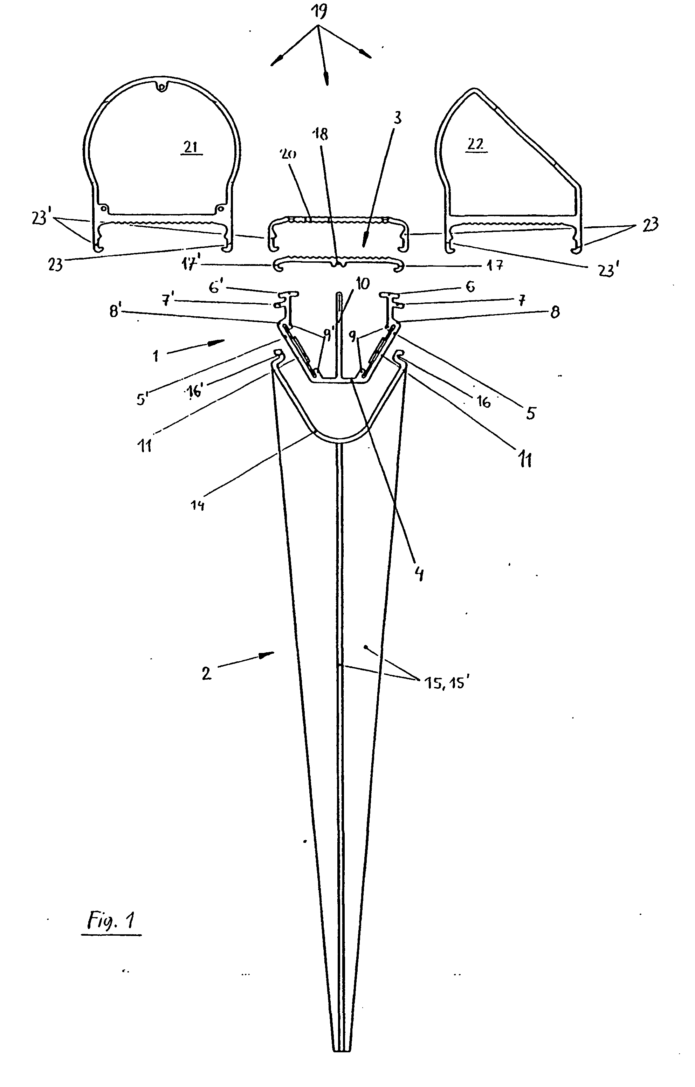

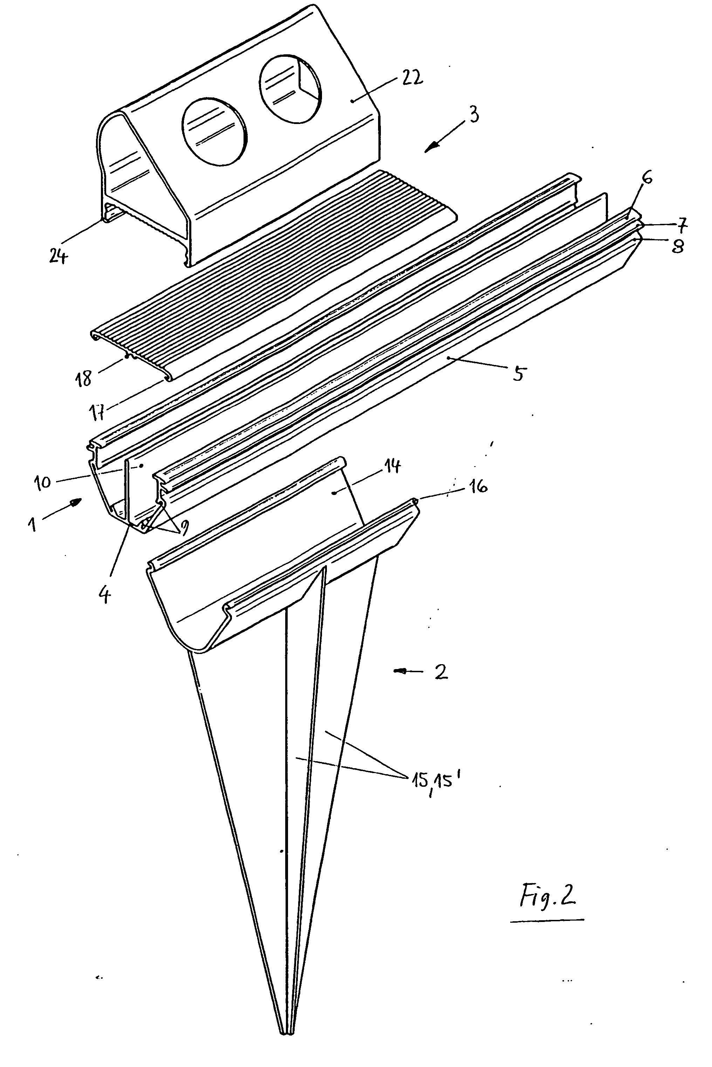

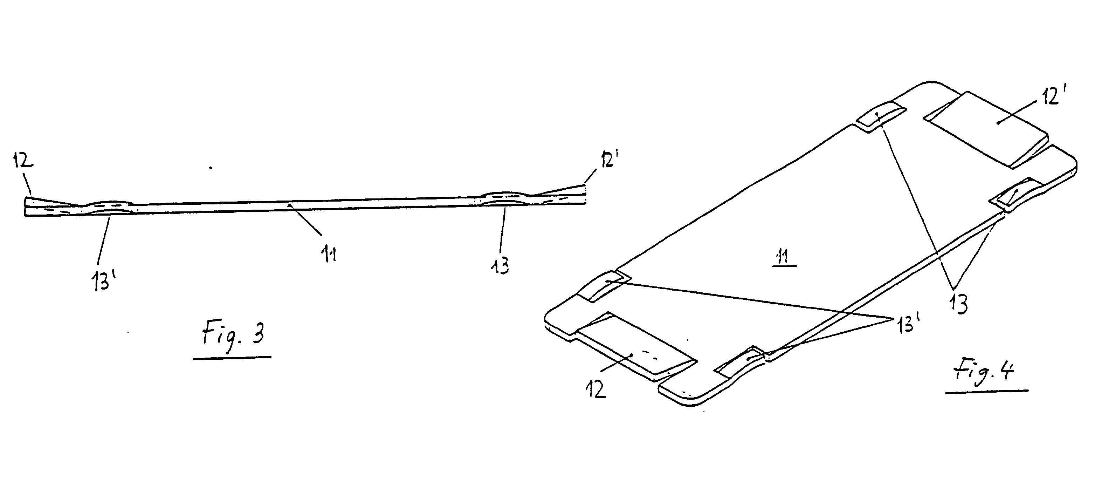

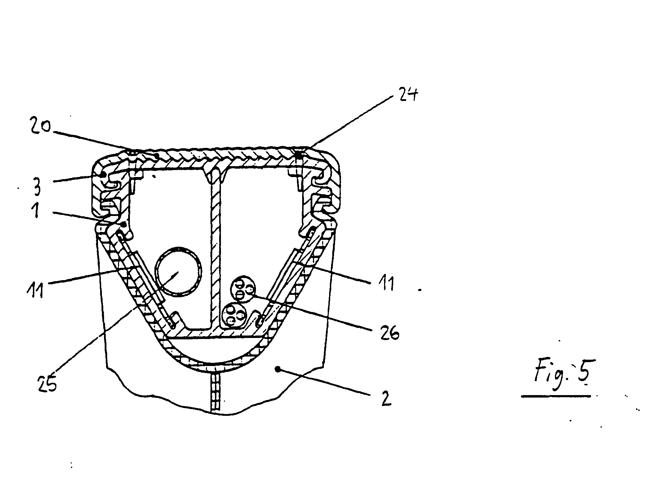

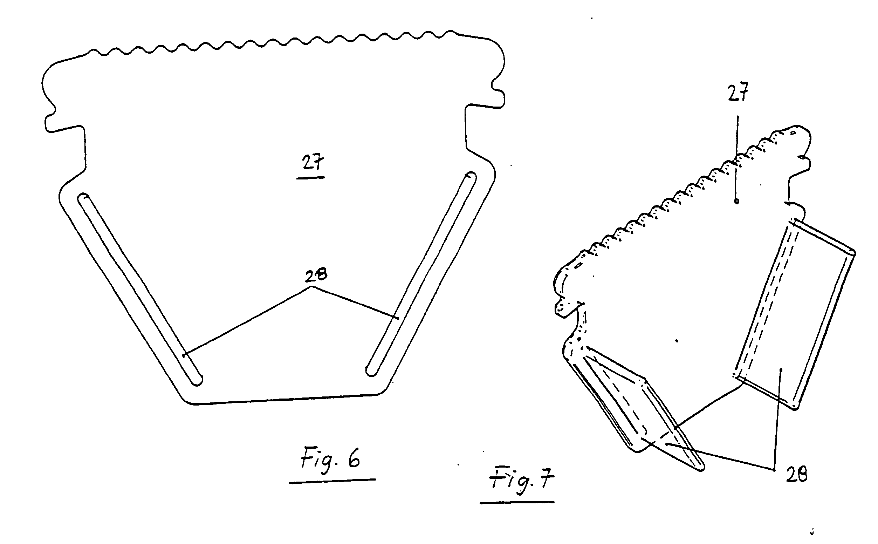

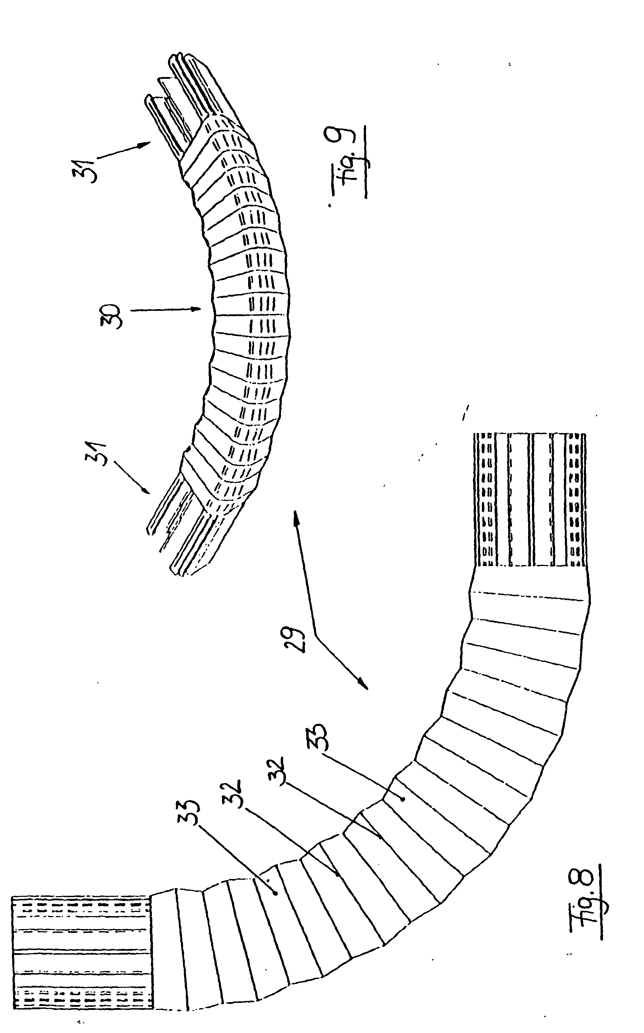

Der erfindungsgemäße Versorgungskanal zur Aufnahme von Versorgungsleitungen, insbesondere für Außenanlagen besteht gemäß Fig. 1 und 2 aus einem in das Erdreich der Außenanlage eingelassenen Aufnahmekörper 1 zur Aufnahme der Wasser- und/oder Elektroleitungen, wobei der Aufnahmekörper 1 in mehrere gleichfalls in das Erdreich der Außenanlage eingelassene Bodenanker 2 eingerastet und mittels eines aufsteckbaren Deckel-Elements 3 abgedeckt ist. Dabei ist der Aufnahmekörper 1 so tief in das Erdreich der Außenanlage eingelassen, dass das Deckel-Element 3 etwa ebenerdig abschließt.
Der Aufnahmekörper 1 ist dünnwandig und aus einem starren Kunststoff ausgeführt. Der Aufnahmekörper 1 besitzt eine symmetrisch trapezförmige Querschnittsform mit einer ebenen Bodenwand 4 und mit zwei Seitenwänden 5, 5', die in ihrem unteren Bereich jeweils in einem stumpfen Winkel schräg von der Bodenwand 4 wegführen und in ihrem oberen Bereich etwa senkrecht zu der Bodenwand 4 ausgerichtet sind. In dem oberen Bereich schließen die Seitenwände 5, 5' jeweils mit einer oberen Befestigungsleiste 6, 6' ab. Dabei ragt die obere Befestigungsleiste 6, 6' sowohl nach innen als auch nach außen leicht über die Seitenwand 5, 5' hinaus. Außen auf der Seitenwand 5, 5' weist diese jeweils noch eine Abstandsleiste 7, 7' auf, die etwa in der Mitte des senkrecht zu der Bodenwand 4 verlaufenden Bereichs der Seitenwand 5, 5' angeordnet ist und die den nach außen gerichteten Teil der oberen Befestigungsleiste 6, 6' überragt. Der jeweilige Übergangsbereich zwischen dem schräg und dem senkrecht zu der Bodenwand 4 verlaufenden Bereich der Seitenwand 5, 5' ist als eine Rastkante 8, 8' ausgebildet. Innen auf der Seitenwand 5, 5' weist diese jeweils in den schräg zu der Bodenwand 4 verlaufenden Bereich einander zugewandte Aufnahmeleisten 9, 9' auf. In der Symmetrieachse besitzt der Aufnahmekörper 1 eine senkrecht zur Bodenwand 4 bis zur Höhe der Seitenwand 5, 5' aufragende Trennwand 10, die bis in Höhe des Deckels 3 ragt.
Der Aufnahmekörper 1 kann als ein gerades, ein abgewinkeltes oder als ein flexibles Element ausgeführt sein. Der Aufnahmekörper 1 ist mit einem und nachfolgend mit weiteren Aufnahmekörpern verlängerbar. Dazu lassen sich in die Aufnahmeleisten 9, 9' entsprechend abgestimmte Verbindungs-Elemente 11 einrasten. Ein solches Verbindungs Element 11 ist gem. Fig. 3 und 4 rechteckig und flach ausgeführt, besitzt auf beiden Stirnseiten einen klappbaren Bereich 12 12', an dem es von Hand greifbar ist. An den beiden Seiten weist das Verbindungs-Element 11 jeweils zwei Federbereiche 13, 13' auf. Die Federbereiche 13, 13' sind so gestaltet, dass die Federbereiche 13, 13' zwischen der Seitenwand 5, 5' und der Aufnahmeleiste 9, 9' des Aufnahmekörpers 1 auf das Fixieren des Verbindungs-Elements 11 in dem Aufnahmekörper 1 entsprechend abgestimmt sind.
Der Bodenanker 2 besteht aus einer auf die Querschnittsform des Aufnahmekörpers 1 abgestimmten Verbindungsstück 14 und im Querschnitt kreuzförmig angeordneten Verankerungsplatten 15, 15'. Das Verbindungsstück 14 des Bodenankers 2 besitzt jeweils eine auf die Rastkante 8, 8' des Aufnahmekörpers 1 abgestimmte Klemmleiste 16, 16'. Die Verankerungsplatten 15, 15' des Bodenankers 2 sind unterhalb des Verbindungsstückes 13 angeordnet und laufen spitz nach unten zu. Sowohl die Länge des Bodenankers 2 als auch das Material aus dem der Bodenanker 2 besteht, ist entsprechend den Eigenschaften des Erdreichs der Außenanlage varüerbar. Der Bodenanker 2 besteht vorzugsweise aus einem Kunststoffmaterial.
Das Deckel-Element 3 besitzt in Längsrichtung des Aufnahmekörpers 1 seitlich je eine Klemmleiste 17, 17', die auf das Einrasten mit der oberen Befestigungsleiste 6, 6' des Aufnahmekörpers 1 entsprechend abgestimmt ist. Zudem weist das Deckel-Element 3 auf seiner Innenseite eine mittige Aufnahmeleiste 18 zum Eingreifen der Trennwand 10 des Aufnahmekörpers 1 auf. Auf der Außenseite besitzt das Deckel-Element 3 eine in Längsrichtung gewellte Oberfläche. Das Deckel-Element 3 besteht gleich dem Aufnahmekörper 1 aus einem starren Kunststoffmaterial.
Auf den mittels des Deckel-Elementes 3 abgedeckte Aufnahmekörper 1 sind mehrere und unterschiedliche Funktionselemente 19, wie beispielsweise ein Funktionsdeckel-Element 20, ein Lampen-Element 21 oder ein Steckdosen-Element 22 befestigbar. Die Funktions-Elemente 19 besitzen in Längsrichtung des Aufnahmekörpers 1 seitlich je eine Klemmleiste 23, 23', die für das Aufstecken auf den Aufnahmekörper 1 und auf die Klemmleiste 16, 16' des Bodenankers 2 entsprechend abgestimmt ist. Die Unterseite der Funktions-Elemente 19 ist in Längsrichtung gewellt ausgeführt, wobei diese gewellte Oberfläche auf die gewellte Oberfläche der Außenseite des Deckel-Elementes 3 entsprechend abgestimmt ist, so dass die Funktions-Elemente 19 vollflächig auf dem Deckel-Element 3 aufliegen. Gemäß der Fig. 5 sind die Funktions-Elemente 19, hier das Funktions-Deckelelement 20, zusätzlich mittels mehrerer Schraubverbindungen 24, 24', sowohl mit dem Deckel-Element 3 als auch mit der Befestigungsleiste 6, 6' des Aufnahmekörpers 1 verbindbar. Die Schraubverbindung 24, 24' ist optional verwendbar. In die durch die Trennwand 10 in dem Aufnahmekörper 1 entstehenden beiden Kammern sind einerseits eine oder mehrere wasserführende Versorgungsleitungen 25 und andererseits eine oder mehrere stromführende Versorgungsleitungen 26 verlegt. Die Funktions-Elemente 19 sind mit den entsprechenden Medien, aus den jeweiligen in dem Aufnahmekörper 1 geführten Versorgungsleitungen versorgbar. Dazu sind die Versorgungsleitungen durch entsprechende, nicht dargestellte Öffnungen sowohl durch das Deckel-Element 3 als auch durch die Funktions-Elemente 19 hindurchgeführt.
Ein stirnseitiges Ende des Aufnahmekörpers 1 ist mittels eines in Fig. 6 und 7 dargestellten Abschlussdeckels 27 verschließbar ausgeführt. Der Abschlussdeckel 27 ist so ausgeführt, dass der Abschlussdeckel 27 den Aufnahmekörper 1 flach abschließt, wobei der Abschlussdeckel 27 zwei senkrecht angeordnete Verbindungsflächen 28, 28' aufweist, die sowohl für das Eingreifen in den Bereich zwischen der Seitenwand 5, 5' und der Aufnahmeleiste 9, 9' des Aufnahmekörpers 1 als auch auf das Fixieren des Abschlussdeckels 27 in dem Aufnahmekörper 1 entsprechend abgestimmt sind.
Gemäß der Fig. 8 und 9 ist dem starren Aufnahmekörper 1 ein flexibler Aufnahmekörper 29 zugeordnet. Dieser flexible Aufnahmekörper 29 besteht aus einem flexiblen Mittelteil 30 und zwei, jeweils am Ende des flexiblen Mittelteils 30 befestigte Kupplungsstücke 31. Dabei ist das Profil der Kupplungsstücke 31 auf das Profil und auf die Abmessungen des starren Aufnahmekörper 1 abgestimmt und so zum Aufnahmekörper 1 passfähig ausgeführt. Das flexible Mittelteil 30 besteht aus mehreren radialen Gliedern 32, die in ihrer äußeren Form und in ihren Abmessungen auf die Querschnittsform des Aufnahmekörpers 1 abgestimmt sind und die ziehharmonikaähnlich von einer flexiblen Kunststoffhaut 33 überspannt sind.

Die Verlegung des erfindungsgemäßen Versorgungskanals soll nun anhand einer Funktionsheschreibung erläutert werden.

Dazu ist von einem Bediener das Erdreich der Außenanlage in entsprechender Weise mittels eines üblichen Spatens auszuheben. Dabei wird möglichst darauf geachtet, dass der Einstich in den Erdboden in demselben Winkel erfolgt, wie die Seitenwände 5, 5' des trapezförmigen Aufnahmekörpers 1 ausgerichtet sind. Damit erhalten die Seitenwände 5, 5' eine feste Abstützung gegenüber dem gefestigten Erdreich. Nachfolgend werden die Bodenanker 2 durch einschieben in das Erdreich gesetzt und in der Höhe entsprechend ausgerichtet. Dann klemmt der Bediener den Aufnahmekörper 1 in das Verbindungsstück 14 der Bodenanker 2 ein. Dabei rastet die Rastkante 8, 8' des Aufnahmekörpers 1 hinter die Klemmleiste 16, 16' des Verbindungsstücks 14 des Bodenankers 2 ein. Ein Aufnahmekörper 1 kann mit einem weiteren, entweder gerade, abgewinkelt oder flexibel ausgeführten Aufnahmekörper 1 verlängert werden. Dazu werden von dem Bediener zwei Verbindungs-Elemente 11 in die Aufnahmeleisten 9, 9' des ersten Aufnahmekörpers 1 eingeschoben. Die Verbindungs-Elemente 11 werden dabei etwa bis zur Hälfte in den einen Aufnahmekörper 1 eingeschoben. Auf die noch überstehende Hälfte der Verbindungs-Elements 11 wird der nachfolgende Aufnahmekörper 1 in entsprechender Weise aufgesteckt.
Zur Richtungsänderung oder zur Niveauveränderung des Versorgungskanals werden ein oder mehrere flexible Aufnahmekörper 29 eingesetzt, mit denen jedes Hindernis umgangen oder unterführt bzw. überführt werden kann.
Nach dieser Vorbereitung werden die Versorgungsleitungen in die durch die Trennwand 10 abgeteilte Kammer für wasserführende Versorgungsleitungen 25 und in die Kammer für stromführende Versorgungsleitungen 26 entsprechend in den Aufnahmekörper 1 eingelegt.
Der Aufnahmekörper 1 wird danach durch Aufstecken des Deckel-Elements 3 abgedeckt und verschlossen, wobei die Klemmleiste 17, 17' des Deckel-Elementes 3 hinter die obere Befestigungsleiste 6, 6' des Aufnahmekörpers 1 einrastet. Bedarfsweise können von dem Bediener Funktions-Elemente 19 auf dem Versorgungskanal durch Aufstecken und gegebenenfalls Verschrauben befestigt werden. Beim Aufstecken rastet die Klemmleiste 23, 23' des Funktions-Elements 19 hinter die Klemmleiste 16, 16' des Bodenankers 2 ein. An den stirnseitigen Enden des Versorgungskanals wird dieser mittels eines einsteckbaren Abschlussdeckels 27 verschlossen. Sowohl die Zu- als auch die Abführung der Versorgungsleitungen in bzw. aus dem Versorgungskanal erfolgt durch die entsprechenden, nicht dargestellten Öffnungen in dem Deckel-Element 3.
Der Aushub wird danach zu beiden Seiten des Versorgungskanals wieder angefüllt, so dass das Deckel-Element 3 etwa ebenerdig mit der Umgebung abschließt.

### Liste der Bezugszeichen

- 1: Aufnahmekörper
- 2: Bodenanker
- 3: Deckel-Element
- 4: Bodenwand
- 5, 5': Seitenwand
- 6, 6': obere Befestigungsleiste
- 7, 7': Abstandsleiste
- 8, 8': Rastkante
- 9, 9': Aufnahmeleiste
- 10: Trennwand
- 11: Verbindungs-Element
- 12, 12': klappbarer Bereich
- 13, 13': Federbereich
- 14: Verbindungsstück
- 15, 15': Verankerungsplatte
- 16, 16': Klemmleiste des Bodenankers
- 17, 17': Klemmleiste des Deckel-Elements
- 18: Aufnahmeleiste des Deckel-Elements
- 19: Funktions-Element
- 20: Funktionsdeckel-Element
- 21: Lampen-Element
- 22: Steckdosen-Element
- 23, 23': Klemmleiste des Funktions-Elements
- 24: Schraubverbindung
- 25: Kammer für eine wasserführende Versorgungsleitung
- 26: Kammer für eine stromführende Versorgungsleitung
- 27: Abschlussdeckel
- 28, 28': Verbindungsfläche
- 29: flexibler Aufnahmekörper
- 30: flexibles Mittelteil
- 31: Kupplungsstück
- 32: radiales Glied
- 33: Kunststoffhaut

## Patentansprüche

1. Versorgungskanal zur Aufnahme von Wasser- und/oder Elektroleitungen für Außenanlagen, bestehend aus einem oder mehreren U-förmigen Aufnahmekörpern (1), die über Kupplungselemente miteinander und/oder mit einem oder mehreren Deckel-Elementen (3) verbunden sind, wobei das Deckel-Element (3) Anschlüsse für die Zu- und Ableitung der Wasser- und/oder Elektroleitungen besitzt und der Versorgungskanal von mehreren Bodenankern (2) getragen wird,
**dadurch gekennzeichnet, dass** der Aufnahmekörper (1) als ein starres Strangmaterial mit einer frei wählbaren Länge ausgebildet ist, in seinem Querschnitt eine Trapezform besitzt und mit weiteren Aufnahmekörpern (1), mit den Deckel-Elementen (3), mit einem Abschlussdeckel (27) und mit den Bodenankern (2) zu einer geschlossenen Baueinheit zusammensteckbar ist.

2. Versorgungskanal nach Anspruch 1,
**dadurch gekennzeichnet, dass** der Aufnahmekörper (1) eine Trennwand (10) besitzt, die den Innenraum des starren Aufnahmekörpers (1) in eine Kammer für eine wasserführende Versorgungsleitung (25) und eine Kammer für eine stromführende Versorgungsleitung (26) teilt und die das Deckel-Element (3) abstützt.

3. Versorgungskanal nach Anspruch 1,
**dadurch gekennzeichnet, dass** die steckbare Verbindung zweier Aufnahmekörper (1, 23) durch mindestens ein Verbindungs-Element (11) erfolgt, das durch entsprechende Aufnahmeleisten (9, 9') im Inneren der beiden Aufnahmekörper (1, 23) fixiert ist.

4. Versorgungskanal nach Anspruch 1,
**dadurch gekennzeichnet, dass** der Aufnahmekörper (1), der Bodenanker (2), das Deckel-Element (3) und das Funktions-Element (19) zum Zwecke der Steckbarkeit so gestaltet sind, dass der Bodenanker (2) und das Deckel-Element (3) jeweils übergreifend mit dem Aufnahmekörper (1) verrastet sind und das Funktionselement (17) über das Deckel-Element (3) und den Aufnahmekörper (1) greifend mit dem Bodenanker (2) verrastet sind.

5. Versorgungskanal nach Anspruch 1,
**dadurch gekennzeichnet, dass** zwei starre Aufnahmekörper (1) zur Richtungsänderung durch einen flexiblen Aufnahmekörper (29) verbunden sind, der aus zwei, zum Profil des starren Aufnahmekörpers (1) passenden Kupplungsstücken (31) und einem flexiblen Mittelteil (30) besteht.

6. Versorgungskanal nach Anspruch 5,
**dadurch gekennzeichnet, dass** das flexible Mittelteil (30) aus mehreren radialen, auf die Querschnittsform der starren Aufnahmekörper (1) abgestimmte Gliedern (32) besteht, die von einer Kunststoffhaut (33) überzogen sind.

7. Versorgungskanal nach Anspruch 1,
**dadurch gekennzeichnet, dass** das Deckel-Element (3) eine für das Funktions-Element (19) und für eine begehende Person rutschhemmende Oberfläche aufweist.

## Claims

1. Supply conduit for receiving water pipes and/or electric leads for outside installations, said conduit consisting of one or more U-shaped receiving bodies (1) which are connected to one another via coupling elements and/or to one or more cover elements (3), wherein the cover element (3) possesses connections for leading the water pipes and/or electric leads in and out and the supply conduit is carried by a number of ground anchors (2),
**characterised in that** the receiving body (1) is constructed as a rigid extruded material having a freely selectable length, possesses a trapezoidal shape in its cross-section and can be plugged together with other receiving bodies (1), with the cover elements (3), with an end cover (27) and with the ground anchors (2), to form a closed structural unit.

2. Supply conduit according to claim 1,
**characterised in that** the receiving body (1) possesses a partition (10) which divides the interior space of the rigid receiving body (1) into a chamber for a water-conducting supply pipe (25) and a chamber for a current-conducting supply lead (26), and which supports the cover element (3).

3. Supply conduit according to claim 1,
**characterised in that** the plug-in type connection of two receiving bodies (1, 23) takes place by means of at least one connecting element (11) which is fixed in position in the interior of the two receiving bodies (1, 23) by means of corresponding receiving strips (9, 9').

4. Supply conduit according to claim 1,
**characterised in that** the receiving body (1), the ground anchor (2), the cover element (3) and the functional element (19) are so designed, in order to be capable of being plugged **in, that** the ground anchor (2) and the cover element (3) are latched to the receiving body (1) in a manner engaging over it in each case, and the functional element (17) is latched to the ground anchor (2) in a manner engaging over the cover element (3) and the receiving body (1).

5. Supply conduit according to claim 1,
**characterised in that**, for the purpose of changing direction, two rigid receiving bodies (1) are connected by a flexible receiving body (29) which consists of two coupling pieces (31), which fit the profile of the rigid receiving body (1), and of a flexible central part (30).

6. Supply conduit according to claim 5,
**characterised in that** the flexible central part (30) consists of a number of radial members (32) which are coordinated with the cross-sectional shape of the rigid receiving bodies (1) and are covered by a plastic skin.

7. Supply conduit according to claim 1,
**characterised in that** the cover element (3) has a slip-resistant surface for the functional element (19) and for a person walking on said cover element.

## Revendications

1. Canal d'alimentation destiné à recevoir des conduites d'eau et/ou d'électricité pour des installations extérieures, constitué d'un ou plusieurs corps de réception en forme de U (1) reliés entre eux et/ou à un ou plusieurs éléments de couvercle (3) par des éléments d'accouplement, l'élément de couvercle (3) possédant des raccords pour l'entrée et la sortie des conduites d'eau et/ou d'électricité et le canal d'alimentation étant porté par plusieurs ancrages au sol (2),
**caractérisé en ce que**
le corps de réception (1) en un matériau rigide en forme de cordon dont la longueur peut être choisie librement, sa section transversale est en forme de trapèze et peut être emboîté avec d'autres corps de réception (1), comme les éléments de couvercle (3), avec un couvercle de fermeture (27) et les ancrages au sol (2) pour former une unité fermée.

2. Canal d'alimentation selon la revendication 1,
**caractérisé en ce que**
le corps de réception (1) possède une paroi de séparation (10), qui sépare l'intérieur du corps de réception rigide (1) en une chambre pour une conduite d'alimentation acheminant de l'eau (25) et une chambre pour une conduite d'alimentation acheminant de l'électricité (26), et qui soutient l'élément de couvercle (3).

3. Canal d'alimentation selon la revendication 1,
**caractérisé en ce que**
la liaison par emboîtement entre deux corps de réception (1, 23) s'effectue à l'aide d'au moins un élément de liaison (11) fixé à l'intérieur des deux corps de réception (1, 23) par des baguettes de réception appropriées (9, 9').

4. Canal d'alimentation selon la revendication 1,
**caractérisé en ce que**
le corps de réception (1), l'ancrage au sol (2), l'élément de couvercle (3) et l'élément fonctionnel (19) sont conçus pour l'emboîtement de telle sorte que l'ancrage au sol (2) et l'élément de couvercle (3) sont respectivement enclenchés par chevauchement avec le corps de réception (1) et l'élément fonctionnel (17) est enclenché par l'élément de couvercle (3) et le corps de réception (1) par accrochage avec l'ancrage au sol (2).

5. Canal d'alimentation selon la revendication 1,
**caractérisé en ce que**
pour la modification de la direction, deux corps de réception rigides (1) sont reliés par un corps de réception flexible (29) qui se compose de deux pièces d'accouplement (31) adaptées au profil du corps de réception rigide (1) et d'une pièce intermédiaire flexible (30).

6. Canal d'alimentation selon la revendication 5,
**caractérisé en ce que**
la pièce intermédiaire flexible (30) se compose de plusieurs membres (32) adaptés à la forme de section transversale des corps de réception rigides (1) et recouverts d'une enveloppe en matière plastique (33).

7. Canal d'alimentation selon la revendication 1,
**caractérisé en ce que**
l'élément de couvercle (3) présente une surface antidérapante pour l'élément fonctionnel (19) et pour toute personne qui s'y trouve.
